# EUROPEAN PATENT SPECIFICATION

(11) **EP 0 790 277 B1**
(45) Date of publication and mention of the grant of the patent: **25.08.2004**
(21) Application number: 97102115.9
(22) Date of filing: 11.02.1997
(51) Int. Cl.: C08J 11/08

(54) **Process for sorting polymers**
Verfahren zum Sortieren von Polymeren
Procédé pour le triage de polymères

(30) Priority: 19.02.1996 EP 96200423
(43) Date of publication of application: 20.08.1997
(73) Proprietor: ATOFINA Research, 7181 Seneffe (Feluy) (BE)
(72) Inventor: Dall'Alba, Laurent, 7160 Piéton (BE); Huybrechts, Philippe, 1040 Etterbeek (BE)

(56) References cited:
- EP-A- 0 664 314
- US-A- 4 031 039
- DATABASE WPI Derwent Publications Ltd., London, GB; AN 76-00876X[01] XP002008096 & JP 50 070 480 A (MITSUBISHI HEAVY IND. KK.) , 11 June 1975
- PROCEEDINGS OF THE 25TH INTERSOCIETY ENERGY CONVERSION ENGINEERING CONFERENCE, vol. 5, 12 - 17 August 1990, RENO, NEVADA, pages 131-134, XP000216069 JODY B.J. ET AL: "Recycling of Plastics in Automobile Shredder Residue"

## Description

The present invention relates to a process for sorting polymer mixtures, particularly polymer mixtures from household waste; it also relates to the use of said process in the recycling of polymers.

Polymers are produced in ever increasing amounts. The greatest part thereof is thermoplastic; generically called plastics, they are mostly used as one-way packaging material (but also as agricultural film and for various uses in the automotive, electric and electronic sectors) and end up as plastics waste.

Discarding plastics waste is now questioned from an ecological point of view, as (i) landfill sites are becoming scarce and (ii) the energy content of plastics is lost if they are buried.

Incineration is frequently used for household waste; it is indeed an appropriate means for disposing of polyolefins, whose combustion under controlled conditions yields water, carbon dioxide and as much heat as fuel, but less appropriate for many other polymers which tend to char and which have a lower heating value.

Individual plastics have long been reclaimed. Plastics waste is however typically composed of a mixture of several of the following plastics labelled as commodity plastics :
- polyvinyl chloride (PVC),
- polystyrene (PS),
- low density polyethylene (LDPE),
- high density polyethylene (HDPE),
- polypropylene (PP), and
- polyethylene terephthalate (PET).

LDPE, HDPE and PP are polyolefins (PO) and are referred to as "polyolefin" individually and collectively.

Manual and mechanical sorting of plastics wastes issued from selective collection schemes have been used at small scale in certain semi-commercial recycling schemes; they are however highly unreliable when made by the consumers themselves and very costly when made by specially trained personnel. They still have to be improved in order to increase the specific polymer content. There is thus a need in the art for an improved process for sorting mixtures of waste plastics into its component polymers. There is thus also a need to measure or to quantify the quality of the sorting processes of commingled plastics coming from plastics wastes.

There is further a need for a method for analysing plastics waste to determine the amount of each type of component material (or family of materials). Indeed, such information finds many uses, such as e.g. evaluating the theoretical calorific value associated to the polymeric fraction in refuse for incineration or, as mentioned above, controlling the efficiency of sorting methods, whether manual or mechanical.

Plastics waste, as used herein, designates any mixture at least mostly composed of plastics and which may in addition contain substantial amounts of non-polymeric wastes such as paper or metal.

It has already been proposed in WO-A-9103515 to separate each polymer from a physically commingled mixture of plastics waste by selective dissolution. However, that method requires a very careful and accurate temperature control and operation under high pressure.

It has already been proposed in EP-A-530169 to combine a one-step separation into three fractions with a conversion step wherein one or more fractions are transformed back into light molecular weight products which can be recycled as feedstock. However, that method also requires high-temperature operation.

Further selective dissolution processes are disclosed in US 4031039, JP 50070480 and B.J. Jody et al., "Recycling of Plastics in Automobile Shredder Residue", Proceedings of the 25^{th} Intersociety Energy Conversion Engineering Conference, vol. 5, 12 - 17.08.1990, pages 131 - 134.

It is an object of the present invention to provide a process for sorting plastics waste into fractions, each containing essentially one polymer or polymer family.

Another object of the invention is to provide a process which can be operated at atmospheric pressure.

A further object of the invention is to provide a laboratory method for determining the amount of each plastics material present in a mixture independently from the size of the pieces.

The process of the invention for sorting polymers from plastics waste comprises the following steps :
(i) providing a mixture at least mostly composed of plastics,
(ii) contacting the plastics waste with a first solvent selected from toluene, xylene, ethylbenzene and mixtures thereof at a temperature of 10 to 50°C to form a polystyrene solution in said first solvent and a first remaining solid component,
(iii) separating the polystyrene solution in said first solvent from the first remaining solid component,
(iv) separating the polystyrene from the first solvent,
(v) contacting the first remaining solid component with tetrahydrofurane at a temperature of 10 to 50°C to form a polyvinyl chloride solution in tetrahydrofurane and a second remaining solid component,
(vi) separating the polyvinyl chloride solution in tetrahydrofurane from the second remaining solid component,
(vii) separating the polyvinyl chloride solution from the tetrahydrofurane,
(viii) contacting the second remaining solid component with xylene to form at least one polyolefin solution in xylene and a third remaining solid component substantially containing no polyolefin,
(ix) separating the at least one polyolefin solution in xylene from the third remaining solid component,
(x) separating the polyolefins from the xylene, and
(xi) recovering a third remaining solid component which essentially comprises polyethylene terephthalate as polymeric material.

The present description of the process of the invention is made with the assumption that the initial composition comprises material from each of the separated categories.

The starting material is commingled plastics waste, as hereabove defined, although it is preferred to use commingled household plastics waste. It is first contacted with toluene, xylene, ethylbenzene or a mixture thereof (preferably toluene, ethylbenzene or a mixture thereof) under conditions appropriate to dissolve substantially all PS present in the starting material while leaving substantially all PVC, LDPE, HDPE, PP and PET undissolved; typical conditions include atmospheric or near-atmospheric pressure and a temperature of 10 to 50°C, preferably of about 20°C. The solution is then separated from the first remaining solid component, and the PS is recovered from the solution by appropriate means which are known in the art and thus need not be described here.

The first remaining solid component is then contacted with tetrahydrofurane (THF) under conditions appropriate to dissolve in the THF substantially all PVC present in the first remaining material while leaving substantially all LDPE, HDPE, PP and PET undissolved; typical conditions include atmospheric or near-atmospheric pressure and a temperature of 10 to 50°C, preferably of about 20°C. The solution is then separated from the (second) remaining solid component, and the PVC is recovered from the solution by appropriate means which are known in the art and thus need not be described here.

The second remaining solid component is then contacted with xylene (any isomer or mixture thereof) under conditions appropriate to dissolve in the xylene substantially all polyolefins present in the second remaining solid component while leaving substantially all PET undissolved. Several options are available for this step :
(1) substantially all polyolefins are dissolved together; typical conditions include atmospheric or near-atmospheric pressure, a temperature of from 118°C to the boiling temperature;
(2) substantially all LDPE is dissolved at about 75°C to form one solution, substantially all HDPE is dissolved at about 105°C to form a second solution and substantially all PP at a temperature of at least about 118°C to form a third solution, each time operating under atmospheric or near-atmospheric pressure and separating the solution from the then remaining solid component;
(3) combining the preceding options, such as e.g. by dissolving LDPE and HDPE together at about 105°C.

Whenever large amounts of HDPE are to be dissolved, it is preferred to use a two-step operation, whereby part of the HDPE is dissolved to form a first solution before the remaining solids are separated and contacted with fresh solvent to dissolve the remainder of the HDPE.

Each solution is then separated from the remaining solid component, and the polyolefins are recovered individually or collectively, as the case may be, from their solutions by appropriate means which are known in the art and thus need not be described here.

The third solid component ultimately remaining usually contains essentially PET as polymeric material; other polymeric materials are polyesters. Non-polymeric materials if any also remain in the third solid component at the end of the process of the invention; they comprise mineral contaminants, such as metals, and paper (at most 2 wt % of the initial amount of paper is extracted by the process of the invention).

The process of the invention can be adapted as a method for determining the amount of each type of material (or family of materials). It has the advantage that finely ground samples can be analysed, thus increasing homogeneity of the samples and thus reliability of the results.

The invention will now be described by the following examples.

### Example 1

A synthetic sample was prepared by thoroughly mixing 25 g of each of PS, PVC, LDPE, HDPE, PP and PET, finely ground to a size of about 1 mm.

An aliquot of exactly about 20 g of the mixture was mixed during 4 hours with 500 ml toluene at room temperature while stirring. The PS solution was recovered by filtration; the remaining solids were washed with fresh toluene, dried and weighted.

The remaining solids were mixed during 4 hours with 500 ml THF at room temperature while stirring. The PVC solution was recovered by filtration; the remaining solids were washed with fresh THF, dried and weighted.

The then remaining solids were mixed during one hour with 1500 ml xylene at 135°C while stirring. The polyolefins solution was recovered by filtration; the remaining solids were washed with warm xylene, dried and weighted.

Recovery of each polymer or polymer family was estimated from the weightings :
PS 100.4 % wt
PVC 99.3 % wt
PO 99.1 % wt
PET 100.2 % wt.

### Example 2

The procedure of example 1 was repeated with a sample of household plastics waste having the following composition :

| polymer | composition | yield (% wt of initial amount) |
|---|---|---|
| PS | 15 % wt | 99.7 |
| PVC | 3 % wt | 102 |
| PO | 80 % wt | 99.8 |
| PET | 2 % wt | 100 |

Each polymer or polymer family was recovered from its solution by methanol precipitation (through addition of 200 ml methanol at room temperature) and filtration, except PET which was recovered by filtration only. The yields were as indicated above.

## Claims

1. Process for sorting polymers from plastics waste, comprising the steps of:
(i) providing a mixture at least mostly composed of plastics,
(ii) contacting the plastics waste with a first solvent selected from toluene, xylene, ethylbenzene and mixtures thereof at a temperature of 10 to 50° C to form a polystyrene solution in said first solvent and a first remaining solid component,
(iii) separating the polystyrene solution in said first solvent from the first remaining solid component,
(iv) separating the polystyrene from the first solvent,
(v) contacting the first remaining solid component with tetrahydrofurane at a temperature of 10 to 50° C to form a polyvinyl chloride solution in tetrahydrofurane and a second remaining solid component,
(vi) separating the polyvinyl chloride solution in tetrahydrofurane from the second remaining solid component,
(vii) separating the polyvinyl chloride solution from the tetrahydrofurane,
(viii) contacting the second remaining solid component with xylene to form at least one polyolefin solution in xylene and a third remaining solid component substantially containing no polyolefin,
(ix) separating the at least one polyolefin solution in xylene from the third remaining solid component,
(x) separating the polyolefins from the xylene, and
(xi) recovering a third remaining solid component which essentially comprises polyethylene terephthalate as polymeric material.

2. Process according to claim 1, wherein step (viii) is carried out at a temperature of from 118°C to the boiling temperature, to dissolve substantially all polyolefins.

3. Process according to claim 1, wherein step (viii) itself comprises the steps of:
(a) contacting said second remaining solid component with xylene at a temperature of about 75°C to dissolve substantially all LDPE,
(b) separating the LDPE solution in xylene from a first remaining solid fraction,
(c) contacting said frist remaining solid fraction with xylene at a temperature of about 105°C to substantially dissolve all HDPE,
(d) separating the HDPE solution in xylene from a second remaining solid fraction,
(e) conctacting said second remaining solid fraction with xylene at a temperature of from 118°C to the boiling temperature to dissolve substantially all PP, and
(f) separating the PP solution in xylene from the third remaining solid component.

4. Process according to claim 1, wherein step (viii) itself comprises the steps of:
either (a) contacting said second remaining solid component with xylene at a temperature of about 75°C to dissolve substantially all LDPE,
or (b) contacting said second remaining solid component with xylene at a temperature of about 105°C to dissolve substantially all LDPE and HDPE,
then (c) separating the LDPE or HDPE solution in xylene from the remaining solid fraction,
and (d) contacting said remaining solid fraction with xylene at a temperature of from 118°C to the boiling temperature to dissolve substantially all polyolefins from said remaining solid fraction.

5. Process according to any one of claims 1 to 4, wherein each sorted polymer is recovered from its solution by removal of the solvent.

6. Process according to any one of claims 1 to 4, wherein each sorted polymer is recovered from its solution by methanol addition and separation of the solid polymer thus formed.

7. Use of the process according to any one of claims 1 to 6 as an analytical method.

## Patentansprüche

1. Prozess zum Sortieren von Polymeren aus Kunststoffabfall, umfassend die Schritte des:
(i) Bereitstellens eines Gemischs, das zumindest großenteils aus Kunststoffen zusammengesetzt ist,
(ii) Inkontaktbringens des Kunststoffabfalls mit einem ersten Lösungsmittel, gewählt aus Toluol, Xylol, Ethylbenzol und Gemischen davon auf einer Temperatur von 10 bis 50°C, um eine Polystyrenlösung in besagtem ersten Lösungsmittel und eine erste verbleibende Feststoffkomponente zu bilden;
(iii) Abscheidens der Polystyrenlösung in besagtem ersten Lösungsmittel von der ersten verbleibenden Feststoffkomponente,
(iv) Abscheidens des Polystyrens von dem ersten Lösungsmittel,
(v) Inkontaktbringens der ersten verbleibenden Feststoffkomponente mit Tetrahydrofuran auf einer Temperatur von 10 bis 50°C, um eine Polyvinylchloridlösung in Tetrahydrofuran und eine zweite verbleibende Feststoffkomponente zu bilden,
(vi) Abscheidens der Polyvinylchloridlösung in Tetrahydrofuran von der zweiten verbleibenden Feststoffkomponente,
(vii) Abscheidens der Polyvinylchloridlösung von dem Tetrahydrofuran,
(viii) Inkontaktbringens der zweiten verbleibenden Feststoffkomponente mit Xylol, um zumindest eine Polyolefinlösung in Xylol und eine dritte verbleibende Feststoffkomponente, die im Wesentlichen kein Polyolefin enthält, zu bilden,
(ix) Abscheidens der zumindest einen Polyolefinlösung in Xylol von der dritten verbleibenden Feststoffkomponente,
(x) Abscheidens der Polyolefine von dem Xylol, und
(xi) Rückgewinnens einer dritten verbleibenden Feststoffkomponente, die im Wesentlichen Polyethylenterephthalat als Polymermaterial umfasst.

2. Prozess gemäß Anspruch 1, wobei Schritt (viii) auf einer Temperatur von zwischen 118°C bis zur Siedetemperatur ausgeführt wird, um im Wesentlichen alle Polyolefine aufzulösen.

3. Prozess gemäß Anspruch 1, wobei Schritt (viii) selbst die Schritte umfasst des:
(a) Inkontaktbringens besagter zweiter verbleibender Feststoffkomponente mit Xylol auf einer Temperatur von etwa 75°C, um im Wesentlichen alles LDPE aufzulösen,
(b) Abscheidens der LDPE-Lösung in Xylol von einer ersten verbleibenden Feststofffraktion,
(c) Inkontaktbringens besagter erster verbleibender Feststofffraktion mit Xylol auf einer Temperatur von etwa 105°C, um im Wesentlichen alles HDPE aufzulösen,
(d) Abscheidens der HDPE-Lösung in Xylol von einer zweiten verbleibenden Feststofffraktion,
(e) Inkontaktbringens besagter zweiter verbleibender Feststofffraktion mit Xylol auf einer Temperatur von etwa 118°C bis zum Siedepunkt, um im Wesentlichen alles PP aufzulösen, und
(f) Abscheidens der PP-Lösung in Xylol von der dritten verbleibenden Feststoffkomponente.

4. Prozess gemäß Anspruch 1, wobei Schritt (viii) selbst die Schritte umfasst:
entweder (a) des Inkontaktbringens besagter zweiter verbleibender Feststoffkomponente mit Xylol auf einer Temperatur von etwa 75°C, um im Wesentlichen alles LDPE aufzulösen,
oder (b) des Inkontaktbringens besagter zweiter verbleibender Feststoffkomponente mit Xylol auf einer Temperatur von etwa 105°C, um im Wesentlichen alles LDPE und HDPE aufzulösen,
dann (c) des Abscheidens der LDPE- oder HDPE-Lösung in Xylol von der verbleibenden Feststofffraktion,
und (d) des Inkontaktbringens besagter verbleibender Feststofffraktion mit Xylol auf einer Temperatur von zwischen 118°C bis zur Siedetemperatur, um im Wesentlichen alle Polyolefine aus besagter verbleibender Feststofffraktion aufzulösen.

5. Prozess gemäß einem der Ansprüche 1 bis 4, wobei jedes sortierte Polymer durch Entfernen des Lösungsmittels aus seiner Lösung rückgewonnen wird.

6. Prozess gemäß einem der Ansprüche 1 bis 4, wobei jedes sortierte Polymer durch Methanolzusatz und Abscheidung des so gebildeten Feststoffpolymers aus seiner Lösung rückgewonnen wird.

7. Anwendung des Prozesses gemäß einem der Ansprüche 1 bis 6 als Analyseverfahren.

## Revendications

1. Procédé pour trier des polymères à partir de déchets de matières plastiques, comprenant les étapes consistant à :
(i) procurer un mélange composé au moins en majeure partie de matières plastiques ;
(ii) mettre les déchets de matières plastiques en contact avec un premier solvant choisi parmi le groupe comprenant le toluène, le xylène, l'éthylbenzène et leurs mélanges à une température de 10 à 50 °C pour former une solution de polystyrène dans ledit premier solvant et un premier composant solide qui subsiste ;
(iii) séparer la solution de polystyrène dans ledit premier solvant du premier composant solide qui subsiste ;
(iv) séparer le polystyrène du premier solvant ;
(v) mettre le premier composant solide qui subsiste en contact avec du tétrahydrofuranne à une température de 10 à 50 °C pour former une solution de chlorure de polyvinyle dans du tétrahydrofuranne et un deuxième composant solide qui subsiste ;
(vi) séparer la solution de chlorure de polyvinyle dans du tétrahydrofuranne du deuxième composant solide qui subsiste ;
(vii) séparer la solution de chlorure de polyvinyle du tétrahydrofuranne ;
(viii) mettre le deuxième composant solide qui subsiste en contact avec du xylène pour former au moins une solution de polyoléfine dans du xylène et un troisième composant solide qui subsiste essentiellement exempt de polyoléfine ;
(ix) séparer ladite au moins une solution de polyoléfine dans du xylène du troisième composant solide qui subsiste ;
(x) séparer les polyoléfines du xylène ; et
(xi) récupérer un troisième composant solide qui subsiste qui comprend essentiellement du polyéthylène-téréphtalate à titre de matière polymère.

2. Procédé selon la revendication 1, dans lequel on effectue l'étape (viii) à une température allant de 118 °C à la température d'ébullition pour dissoudre essentiellement la totalité des polyoléfines.

3. Procédé selon un revendication 1, dans lequel l'étape (viii) elle-même comprend les étapes consistant à :
(a) mettre ledit deuxième composant solide qui subsiste en contact avec du xylène à une température d'environ 75 °C pour dissoudre essentiellement la totalité du LDPE ;
(b) séparer la solution de LDPE dans du xylène d'une première fraction de produit solide qui subsiste ;
(c) mettre ladite première fraction de produit solide qui subsiste en contact avec du xylène à une température d'environ 105 °C pour dissoudre essentiellement la totalité du HDPE ;
(d) séparer la solution de HDPE dans du xylène d'une deuxième fraction de produit solide qui subsiste ;
(e) mettre ladite deuxième fraction de produit solide qui subsiste en contact avec du xylène à une température allant de 118 °C à la température d'ébullition dans le but de dissoudre essentiellement la totalité du PP ; et
(f) séparer la solution de PP dans du xylène du troisième composant solide qui subsiste.

4. Procédé selon la revendication 1, dans lequel l'étape (viii) elle-même comprend les étapes consistant à :
soit, (a) mettre ledit deuxième composant solide qui subsiste en contact avec du xylène à une température d'environ 75 °C pour dissoudre essentiellement la totalité du LDPE ;
soit, (b) mettre ledit deuxième composant solide qui subsiste en contact avec du xylène à une température d'environ 105 °C pour dissoudre essentiellement la totalité du LDPE et du HDPE ;
ensuite, (c) séparer la solution de LDPE ou de HDPE dans du xylène de la fraction de produit solide qui subsiste ;
et (d) mettre ladite fraction de produit solide qui subsiste en contact avec du xylène à une température allant de 118 °C à la température d'ébullition pour dissoudre essentiellement la totalité des polyoléfines de ladite fraction de produit solide qui subsiste.

5. Procédé selon l'une quelconque des revendications 1 à 4, dans lequel chaque polymère trié est récupéré de sa solution par élimination du solvant.

6. Procédé selon l'une quelconque des revendications 1 à 4, dans lequel chaque polymère trié est récupéré de sa solution par addition de méthanol et par séparation du polymère solide ainsi obtenu.

7. Utilisation du procédé selon l'une quelconque des revendications 1 à 6, à titre de procédé analytique.
